# EUROPÄISCHE PATENTANMELDUNG

(11) **EP 1 285 712 A1**
(43) Veröffentlichungstag der Anmeldung: **26.02.2003**
(21) Anmeldenummer: 02007965.3
(22) Anmeldetag: 10.04.2002
(51) Int. Cl.: B23B 31/30, B23Q 11/10

(54) **Hydraulisch betätigter Spannzylinder sowie Verfahren zur Montage eines Spannzylinders**

(30) Priorität: 13.08.2001 DE 10139718
(71) Anmelder: Röhm GmbH, 89567 Sontheim (DE)
(72) Erfinder: Röhm, Günter Horst, 89567 Sontheim (DE)
(74) Vertreter: Hentrich, Swen Dipl.-Phys. Dr.

(57) **Zusammenfassung**

Die Erfindung betrifft einen hydraulisch betätigten Spannzylinder für Spanneinrichtungen an Werkzeugmaschinen (2), mit einem mit der rotierend antreibbaren Arbeitsspindel (6) der Werkzeugmaschine (2) koppelbaren Zylindergehäuse (3) und einem in der Zylinderkammer (4) axial verstellbaren Zylinderkolben (5), sowie mit einem Verteiler (12), der ein feststehendes, die Druckmittelanschlüsse (26) aufweisendes Verteilergehäuse (13) und eine mit dem Zylindergehäuse (3) verbundene, die Druckmittelleitungen (25) aufweisende Verteilerhohlwelle (15) umfaßt. Das Verteilergehäuse (13) ist über eine Aufnahmeglocke (9) an der Werkzeugmaschine (2) befestigt, wobei der Verteiler (12) eine zwischen dem Verteilergehäuse (13) und der Verteilerhohlwelle (15) angeordnete Verteilerbuchse (14) aufweist. Die Verteilerbuchse (14) ist zwischen einer ersten Position, die der Montage des Verteilers (12) und dessen Zentrierung dient, und einer zweiten Position verstellbar, in der das Verteilerspiel für die Mediumübertragung bereitgestellt ist. Die Erfindung betrifft weiterhin ein Verfahren zur Montage eines Spannzylinders.

## Beschreibung

Die Erfindung betrifft einen hydraulisch betätigten Spannzylinder für Spanneinrichtungen an Werkzeugmaschinen, mit einem mit der rotierend antreibbaren Arbeitsspindel der Werkzeugmaschine koppelbaren Zylindergehäuse und einem in der Zylinderkammer axial verstellbaren Zylinderkolben, sowie mit einem Verteiler, der ein feststehendes, die Druckmittelanschlüsse aufweisendes Verteilergehäuse und eine mit dem Zylindergehäuse verbundene, die Druckmittelleitungen aufweisende Verteilerhohlwelle umfaßt. Die Erfindung betrifft weiterhin ein Verfahren zur Montage eines Spannzylinders.

Spannzylinder der eingangs genannten Art sind aus der Praxis bekannt und beispielsweise in der DE 198 23 823 C2 beschrieben. Bei diesen bekannten Spannzylindern erfolgt die Mediumzuführung über den nicht rotierenden Verteiler, der mittels Wälzlager auf der nabenartigen Verlängerung des Zylindergehäuses gelagert ist. Über die Wälzlager kann der Spalt zwischen dem stehenden Verteiler und der rotierenden Zylindergehäusenabe bestimmt werden. Durch diesen Spalt erfolgt mit hinreichender Zuverlässigkeit die Mediumübertragung, nachdem infolge der mittlerweile erreichbaren hohen Drehgeschwindigkeiten mit kontaktbehafteten Dichtungen nicht mehr gearbeitet werden kann. Beim Betrieb dieser Spannzylinder hat sich nun gezeigt, daß trotz höchster Anstrengungen beim dynamischen Auswuchten Restschwingungen präsent bleiben, die nicht ausgeschaltet werden können. Diese Restschwingungen beeinträchtigen über die Arbeitsspindel auch die Qualität der zu bearbeitenden Teile und sind daher unerwünscht.

Der Erfindung liegt die Aufgabe zugrunde, einen Spannzylinder der eingangs genannten Art so auszubilden, daß die vorstehend genannten Restschwingungen weiter verringert werden können. Aufgabe der Erfindung ist weiterhin, ein Verfahren anzugeben, wie ein Spannzylinder zu montieren ist, um die Restschwingungen weitgehend oder vollständig zu eliminieren.

Der die Vorrichtung betreffende Teil der Aufgabe wird bei einem Spannzylinder der eingangs genannten Art dadurch gelöst, daß das Verteilergehäuse über eine Aufnahmeglocke an der Werkzeugmaschine befestigt ist, daß der Verteiler eine zwischen dem Verteilergehäuse und der Verteilerhohlwelle angeordnete Verteilerbuchse aufweist, und daß die Verteilerbuchse zwischen einer ersten Position, die der Montage des Verteilers und dessen Zentrierung dient, und einer zweiten Position verstellbar ist, in der das Verteilerspiel für die Mediumübertragung bereitgestellt ist.

Bei der Ursachenanalyse hat sich gezeigt, daß die Restschwingungen von der Lagerung des Verteilers über die Wälzlager herrühren. Die von den Lagern ausgehenden Restschwingungen lassen sich durch einen Verzicht der Verwendung von Lager zwischen dem Verteilergehäuse und der Verteilerhohlwelle vermeiden, die bei der Erfindung realisiert ist, da durch den Aufbau des Spannzylinders eine hochgenaue Zentrierung erfolgt, von der ausgehend auch in dem lagerlosen Verteiler mit der erforderlichen Genauigkeit das Verteilerspiel justiert und bewahrt werden kann.

Als bevorzugt im Rahmen der Erfindung hat sich herausgestellt, wenn die erste Position durch einen an dem Verteilergehäuse und der Verteilerhohlwelle befestigten, den Transport und der Montage dienenden Transportflansch vorgegeben ist. Durch den Transportflansch wird eine lagerichtige Zuordnung der beteiligten Bauteile erreicht, wobei selbsttätig eine hochgenaue Zentrierung erfolgt, indem in der ersten Position die Verteilerbuchse mit ihrem Innendurchmesser auf dem Außendurchmesser der Verteilerhohlwelle zentriert ist, und indem das Verteilergehäuse mit seinem Innendurchmesser auf dem Außendurchmesser der Verteilerbuchse zentriert ist.

Mit dieser hochgenau ausgerichteten Zentrierung ist der Anschluß der Bauteile an die Werkzeugmaschine möglich, wobei die hochgenaue Zentrierung auch dann erhalten bleibt, wenn der Transportflansch entfernt wird. Die Entfernung des Transportflansches ist erforderlich, um das Verteilerspiel zu justieren, wobei weiterhin vorgesehen ist, daß in der zweiten Position durch einen den Transportflansch im Austausch ersetzten Abschlußflansch gehalten die Verteilerbuchse justiert ist, durch den Abschlußflansch also das Verteilerspiel dauerhaft fixiert ist.

Es hat sich als zweckmäßig erwiesen, wenn die Verstellung der Verteilerbuchse zwischen der ersten Position und der zweiten Position eine Drehung um die Zylinderachse und eine Verschiebung in Richtung der Zylinderachse beinhaltet, und wenn zur Einstellung des Verteilerspiels zwischen der Verteilerhohlwelle und der Verteilerbuchse in der zweiten Position in Umfangsrichtung über einen Teilbereich der aneinander grenzenden Flächen eine Kehlung ausgebildet ist. Bei der Drehung bleibt die hochgenaue Zentrierung erhalten, während in einfacher Weise durch die axiale Verschiebung das Verteilerspiel generiert wird, da in axialer Richtung die Oberfläche der aneinander grenzenden Flächen um die Tiefe der Kehlung zurückweicht, die die Größe des Verteilerspiels bestimmt.

Eine korrekte Justierung der Verteilerbuchse in der zweiten Position ist wesentlich für die erforderliche hochgenaue Zentrierung des lagerlosen Verteilers. Um dem Nutzer diesen kritischen Montageschritt zu erleichtern, ist eine den Transportflansch im Austausch ersetzende Montagelehre vorgesehen, mit einer an der Verteilerbuchse anschließbaren Stellhülse sowie einer an dem Verteilergehäuse und/oder der Verteilerhohlwelle anschließbaren Referenzhülse, wobei die Stellhülse gegenüber der Referenzhülse verstellbar ist.

Diese Verstellung kann in einfacher Weise dadurch erreicht werden, daß die Stellhülse zu ihrer translatorischen Verstellung mit einer in der Referenzhülse gelagerten Verstellspindel gekoppelt ist.

Bevorzugt ist dabei, daß die Stellhülse gegenüber der Referenzhülse genau um das für die Überführung der Verteilerbuchse aus der ersten Position in die zweite Position erforderliche Maß sowohl translatorisch als auch rotatorisch verstellbar ist.

Dies wird erreicht, indem zwischen der Stellhülse und der Referenzhülse eine Gewindeverbindung ausgebildet ist und die Gewindeverbindung Anschläge für die Begrenzung des Drehwinkels auf das erforderliche Maß aufweist.

Der Vermeidung möglicher Fehlbedienungen dient, daß daß das Gewinde der Gewindeverbindung eine Steigung aufweist, die bei der erforderlichen Drehung der Verteilerbuchse deren erforderlichen Vorschub parallel zur Zylinderachse ergibt.

Für eine möglichst präzise Fertigung der Bauteile ist es dabei günstig, wenn die Kehlung im Außenumfang der Verteilerhohlwelle ausgebildet ist. Um die Präzision der Zentrierung nicht durch zu starke Eingriffe bei der Drehung zu beeinträchtigen, ist die Erfindung so gestaltet, daß der Drehwinkel 5° bis 30°, vorzugsweise 15° beträgt.

Im Rahmen der Erfindung ist weiterhin vorgesehen, daß die Verstellung der Verteilerbuchse zwischen der ersten Position und der zweiten Position der axialen Überdeckung von Mediumführungsrinnen in der Verteilerbuchse und der Verteilerhohlwelle dient.

Das Ausmaß der in axialer Richtung erfolgenden Verstellung wird in einfacher Weise dadurch bestimmt, daß dem Transportflansch eine in der ersten Position der Verteilerbuchse zwischen dieser und dem Verteilergehäuse plazierte Distanzscheibe zugeordnet ist, deren Dicke den Betrag bestimmt, um den die Verteilerbuchse nach ihrer Drehung axial verschoben werden kann.

Um eine Feineinstellung des Verteilerspiels zu ermöglichen, sind in der Aufnahmeglocke gleichmäßig über den Umfang verteilt tangential ausgerichtete Stellschrauben angeordnet.

Vorgesehen ist weiterhin, daß am Zylindergehäuse an der Verteilerhohlwelle-Aufnahmepartie radial und axial verlaufende erste Prüfflächen ausgebildet sind. An der Aufnahmeglocke an der Zylindergehäuse-Aufnahmepartie sind radial und axial verlaufende zweite Prüfflächen ausgebildet, während am freien Ende der Verteilerhohlwelle radial und axial verlaufende dritte Prüfflächen ausgebildet sind. Am Verteilergehäuse sind radial und axial verlaufende vierte Prüfflächen ausgebildet. Die ersten bis vierten Prüfflächen dienen dazu, in jedem einzelnen Stadium bei der Montage des Spannzylinders Genauigkeitskontrollen durchführen zu können.

Der das Verfahren betreffende Teil der Aufgabe wird dadurch gelöst, daß der Zylinder mit dem Zylindergehäuse auf das hintere Ende der Maschinenspindel befestigt wird, daß an der ersten Prüffläche des Zylindergehäuses eine Rund- und Planlaufprüfung erfolgt, daß die Aufnahmeglocke an der Werkzeugmaschine befestigt wird, daß an der zweiten Prüffläche der Aufnahmeglocke eine Rund- und Planlaufprüfung erfolgt, daß durch den Transportflansch das Verteilergehäuse, die Verteilerbuchse und die Verteilerhohlwelle in die Montagelage gebracht werden, in der sich die Verteilerbuchse in ihrer ersten Position befindet, daß in der durch den Transportflansch vorgegebenen Lage die Verteilerhohlwelle an dem Zylindergehäuse und das Verteilergehäuse an der Aufnahmeglocke befestigt wird, daß der Transportflansch entfernt wird, daß die Verteilerbuchse in ihre zweite Position verstellt und dort durch den Abschlußflansch gehalten wird, daß an den dritten Prüfflächen der Verteilerhohlwelle eine Rund- und Planlaufprüfung erfolgt, und daß an den vierten Prüfflächen des Verteilergehäuses eine Rund- und Planlaufprüfung erfolgt.

Um dem Nutzer die Verstellung der Verteilerbuchse und deren Justierung, die für die präzise Zentrierung des lagerlosen Verteilers wesentlich ist, zu erleichtern, ist vorgesehen, daß zur Verstellung der Verteilerbuchse aus der ersten Position in die zweite Position nach der Entfernung des Transportflansches die Stellhülse mit der Verteilerbuchse und die Referenzhülse mit dem Verteilergehäuse drehfest verbunden und die Stellhülse verstellt wird.

Alternativ ist es gleichfalls möglich, daß zur Verstellung der Verteilerbuchse aus der ersten Position in die zweite Position nach der Entfernung des Transportflansches die Stellhülse mit der Verteilerbuchse und die Referenzhülse mit der Verteilerhohlwelle drehfest verbunden und die Stellhülse verstellt wird, wobei lediglich die Zugänglichkeit der Verteilerhohlwelle gegenüber dem Verteilergehäuse erschwert ist, dafür aber eine bessere Kontrolle der Verteilerbuchse während der Verstellung in die zweite Position möglich ist.

Da bei dem erfindungsgemäßen Spannzylinder mit dem lagerlosen Verteiler die durch die Lager erzeugten Restschwingungen vermieden werden, muß gewährleistet sein, daß die Zentrierung und die Justierung des Verteilerspiels dauerhaft gewährleistet sind, wodurch sich ganz besondere Anforderungen an die Präzision bei der Montage ergeben, die gewährleistet wird durch jeweils durchzuführende Rundund Planlaufprüfungen nach der Befestigung eines weiteren Bauteils an dem zuvor montierten Ensemble. Nach der so durchgeführten Montage erfolgt erfindungsgemäß eine radiale Feineinstellung des Verteilergehäuses mit den Stellschrauben, die nach der Montage und Justierung eine verbleibende Manipulationsmöglichkeit bieten.

Im folgenden wird die Erfindung an einem in der Zeichnung dargestellten Ausführungsbeispiel näher erläutert; es zeigen:
- Fig. 1: einen Axialschnitt durch einen erfindungsgemäßen Spannzylinder in seiner Arbeitskonfiguration mit dem Abschlußflansch,
- Fig. 2: den isoliert dargestellen Verteiler, verbunden über den Transportflansch vor der Befestigung an dem Zylinder in einem Axialschnitt,
- Fig. 3: den Zylinder vor seiner Befestigung an der Arbeitspindel in einem Axialschnitt,
- Fig. 4: das Detail IV aus Fig. 2,
- Fig. 5: eine der Fig. 4 entsprechende Darstellung mit dem den Transportflansch ersetzenden Abschlußflansch und der in die zweite Position verstellten Verteilerbuchse,

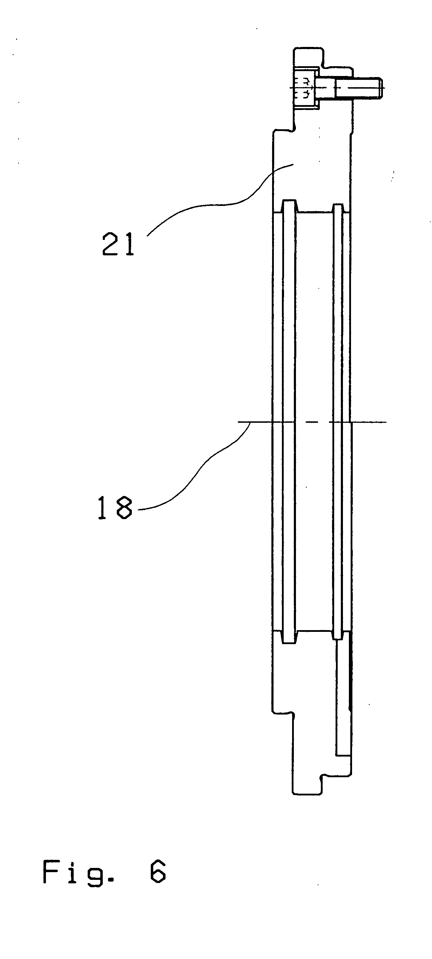

- Fig. 6: eine isolierte Darstellung des Abschlußflansches in einem Axialschnitt,

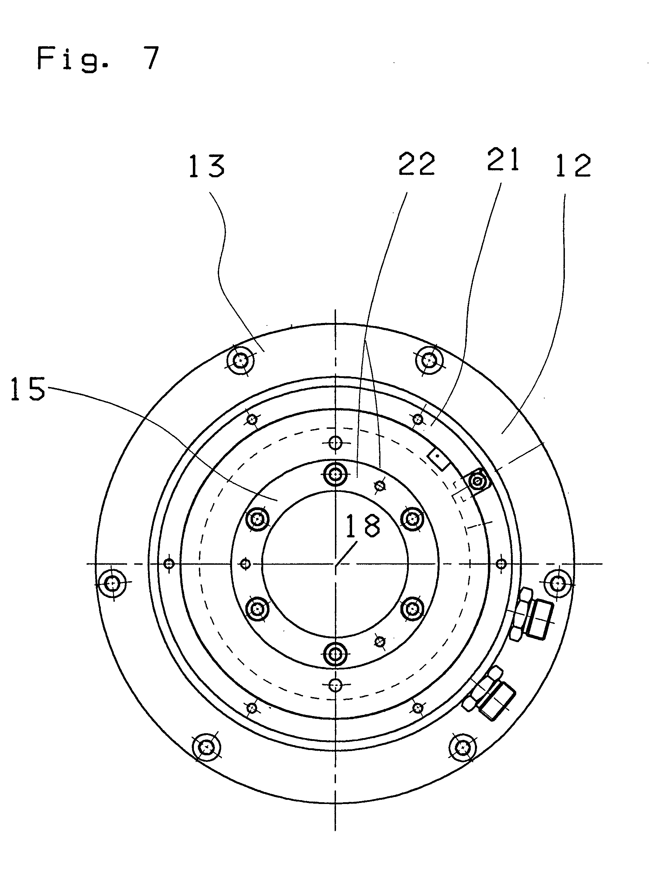

- Fig. 7: eine Hinteransicht des Spannzylinders,

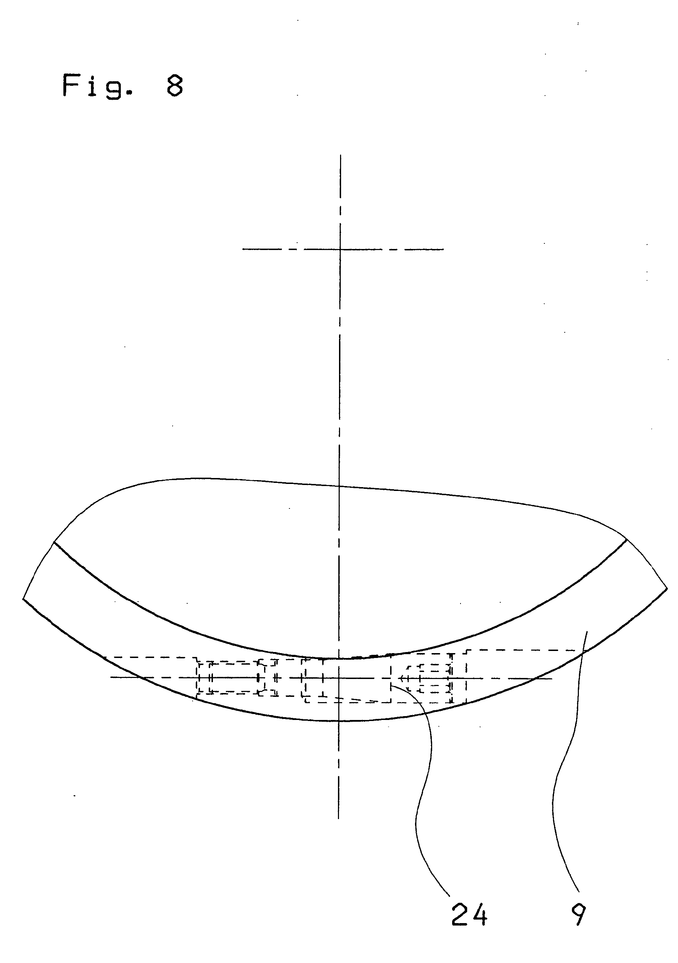

- Fig. 8: auf einem Teil des Umfangs der Aufnahmeglocke eine der Stellschrauben, strichliert dargestellt,
- Fig. 9: eine der Fig. 2 entsprechende Darstellung mit der den Transportflansch ersetzenden Montagelehre, und
- Fig.10: eine der Fig. 9 entsprechende Darstellung einer weiteren Ausführungsform der Montagelehre.

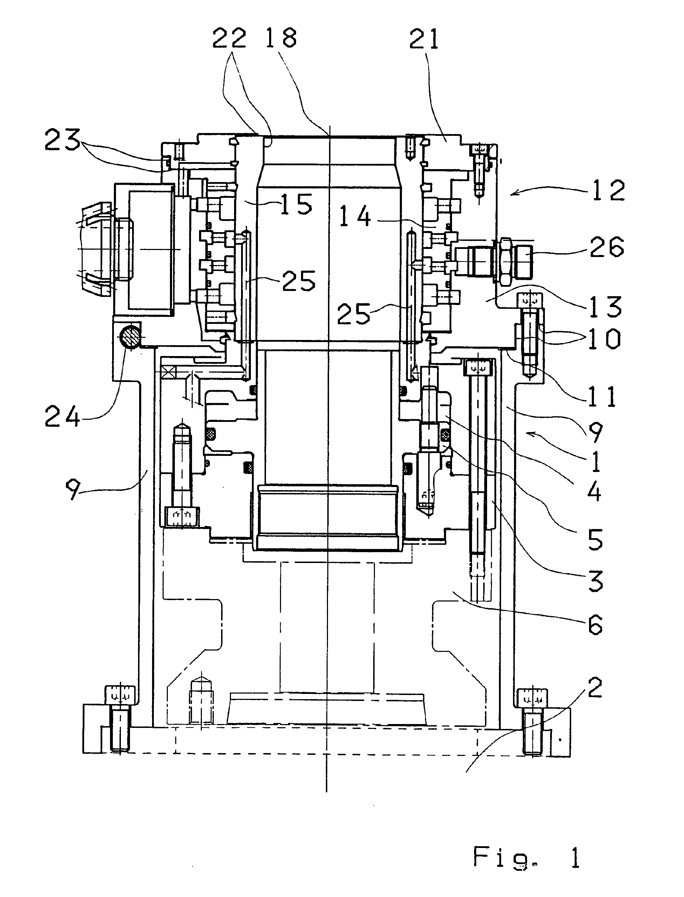

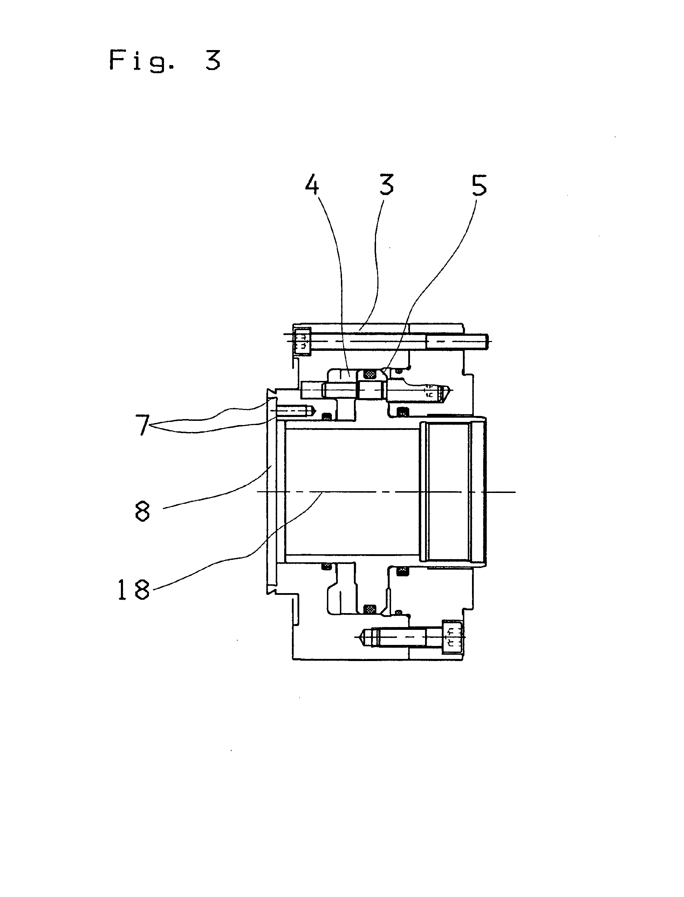

Die Fig. 1 zeigt einen hydraulisch betätigten Spannzylinder 1 für Spanneinrichtungen an Werkzeugmaschinen 2, der ein Zylindergehäuse 3 aufweist, in dessen Zylinderkammer 4 ein Zylinderkolben 5 axial verstellbar ist. Das in Fig. 3 isoliert dargestellte Zylindergehäuse 3 ist in Fig. 1 an der rotierend antreibbaren Arbeitsspindel 6 befestigt dargestellt, wobei nach der Montage des Spannzylinders 1 durch die Befestigung des Zylindergehäuses 3 an der Arbeitsspindel 6 als erstem Montageschritt Rund- und Planlaufprüfungen an ersten Prüfflächen 7 ausgeführt werden, die am Zylindergehäuse 3 an der Verteilerhohlwellen-Aufnahmepartie 8 ausgebildet sind und radial und axial verlaufen. Durch diese Rund- und Planlaufprüfungen wird die korrekte Befestigung des Zylindergehäuses 3 an der Arbeitsspindel 6 überprüft.

Der Spannzylinder 1 verfügt weiterhin über eine Aufnahmeglocke 9, die bei der weiteren Montage an der Werkzeugmaschine 2 befestigt und deren korrekte Montage gleichfalls mittels Rund- und Planlaufprüfungen kontrolliert wird, die an zweiten Prüfflächen 10 erfolgen, die an der Aufnahmeglocke 9 an der Verteilergehäuse-Aufnahmepartie 11 radial und axial verlaufend ausgebildet sind.

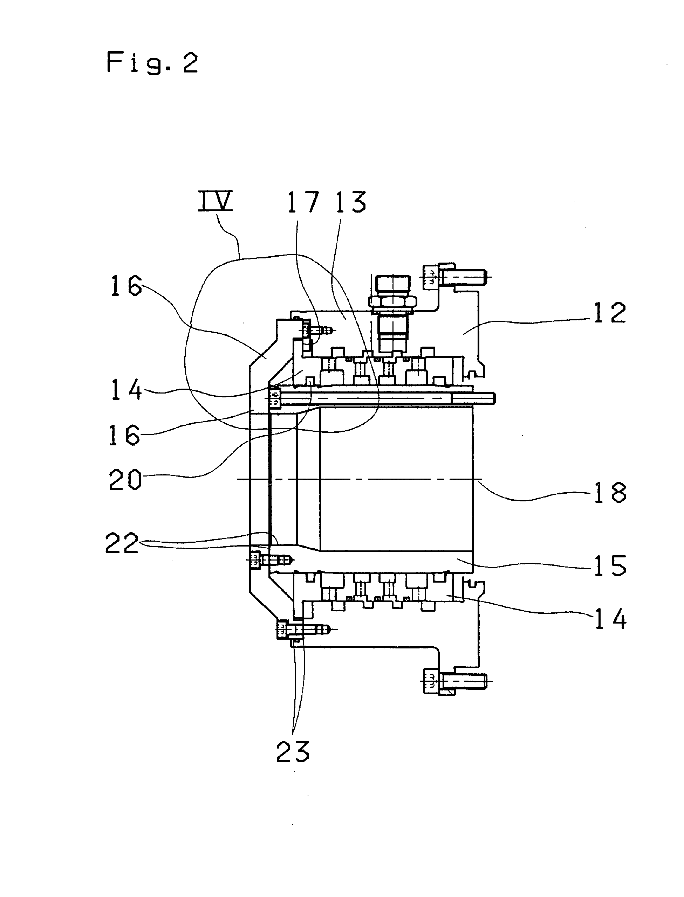

Der Spannzylinder 1 verfügt schließlich weiterhin über einen Verteiler 12, bestehend aus einem die Druckmittelanschlüsse 26 aufweisenden Verteilergehäuse 13, einer Verteilerbuchse 14 und einer die Druckmittelleitungen 25 aufweisenden Verteilerhohlwelle 15, die zur Montage durch einen insbesondere aus der Fig. 2 ersichtlichen Transportflansch 16 in einer fest vorgegebenen relativen Ausrichtung gehalten sind, nämlich in einer ersten Position, in der zwischen der Verteilerbuchse 14 und dem Verteilergehäuse 13 eine Distanzscheibe 17 deren relativen axialen Abstand bestimmt. In der durch den Transportflansch 16 vorgegebenen Lage wird die Verteilerhohlwelle 15 an dem Zylindergehäuse 3 und das Verteilergehäuse 13 an der Aufnahmeglocke 9 befestigt. Daran anschließend wird der Transportflansch 16 entfernt und durch einen Abschlußflansch 21 ersetzt. Vorher ist dazu eine nachfolgend näher erläuterte Verstellung der Verteilerbuchse 14 aus der ersten Position in eine zweite Position erforderlich.

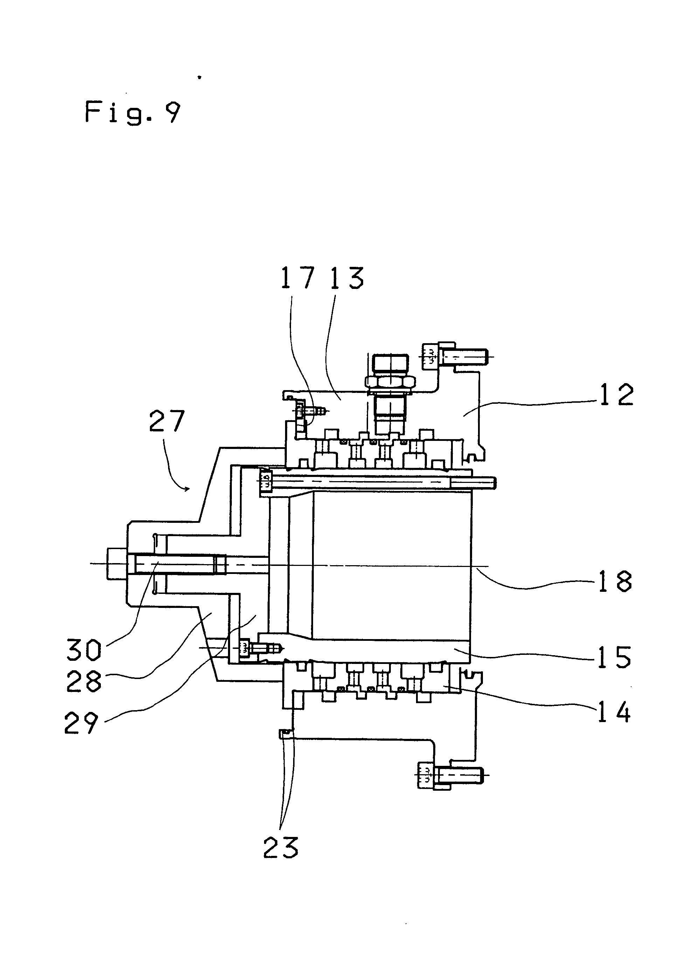

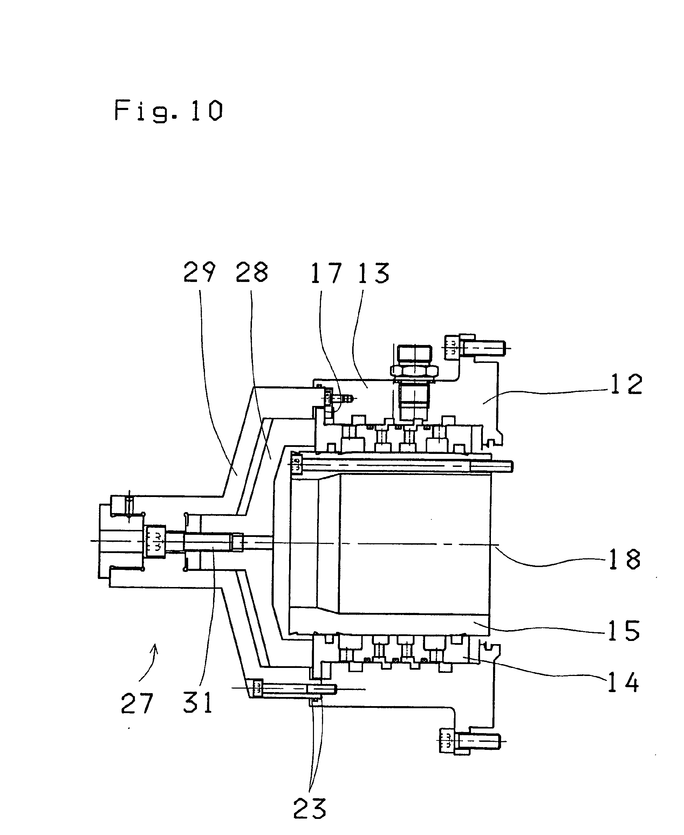

Die Genauigkeit dieser Verstellung sowie deren einfache Ausführbarkeit wird dadurch verbessert, daß eine den Transportflansch 16 im Austausch ersetzende Montagelehre 27 vorgesehen ist, mit einer an der Verteilerbuchse 14 anschließbaren Stellhülse 28 sowie einer an dem Verteilergehäuse 13 (Fig. 10) oder der Verteilerhohlwelle 15 (Fig. 9) anschließbaren Referenzhülse 29, wobei die Stellhülse 28 gegenüber der Referenzhülse 29 verstellbar ist, und zwar genau um das für die Überführung der Verteilerbuchse 14 aus der ersten Position in die zweite Position erforderliche Maß sowohl translatorisch als auch rotatorisch. Dabei ist es möglich, daß die Stellhülse 28 zu ihrer translatorischen Verstellung mit einer in der Referenzhülse 29 gelagerten Verstellspindel 30 gekoppelt ist, die bei ihrer Verdrehung gegenüber der Referenzhülse 29 die Stellhülse 28 mitnimmt.

Eine einfache Alternative ist dadurch gegeben, daß zwischen der Stellhülse 28 und der Referenzhülse 29 eine Gewindeverbindung 31 ausgebildet ist, wobei die Gewindeverbindung 31 Anschläge für die Begrenzung des Drehwinkels auf das erforderliche Maß aufweist und/oder das Gewinde der Gewindeverbindung 31 eine Steigung aufweist, die bei der erforderlichen Drehung der Verteilerbuchse 14 deren erforderlichen Vorschub parallel zur Zylinderachse 18 ergibt.

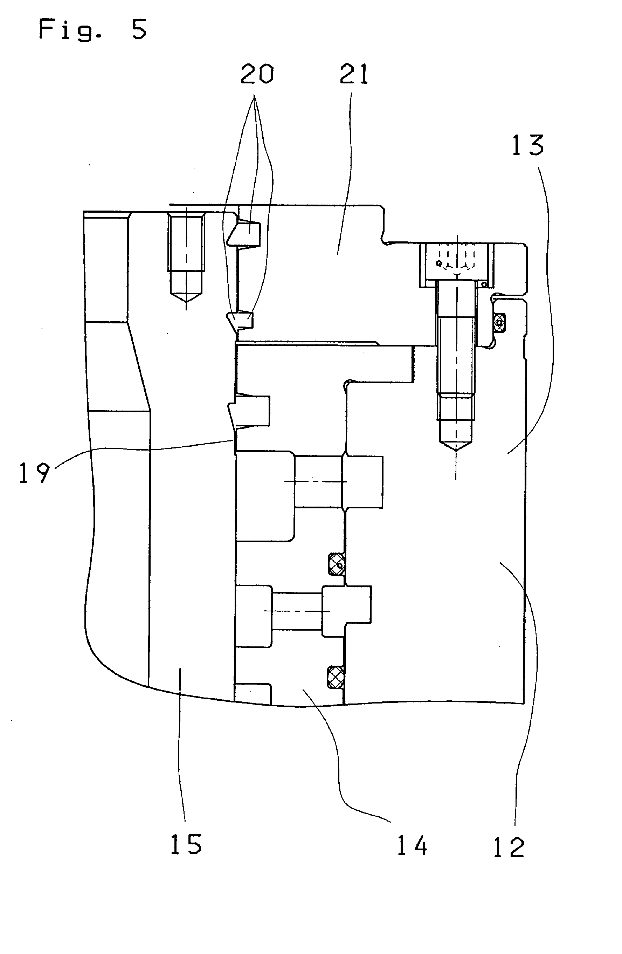

In der ersten Position ist die Verteilerbuchse 14 mit ihrem Innendurchmesser auf dem Außendurchmesser der Verteilerhohlwelle 15 zentriert, wodurch das Verteilergehäuse 13 auch mit seinem Innendurchmesser auf dem Außendurchmesser der Verteilerbuchse 14 zentriert wird. Diese Zentrierung bleibt bei der Befestigung des Verteilers 12 an dem Zylindergehäuse 3 bzw. der Aufnahmeglocke 9 erhalten. Durch die Verstellung der Verteilerbuchse 14 aus der ersten Position in die zweite Position wird das Verteilerspiel für die Mediumübertragung justiert, und zwar ohne daß dazu Lager erforderlich sind. Die Verstellung der Verteilerbuchse 14 zwischen der ersten Position und der zweiten Position beinhaltet eine Drehung um die Zylinderachse 18 und eine Verschiebung in Richtung der Zylinderachse 18, wobei zur Einstellung des Verteilerspiels zwischen der Verteilerhohlwelle 15 und der Verteilerbuchse 14 in Umfangsrichtung über einen Teilbereich der in der zweiten Position aneinandergrenzenden Flächen eine Kehlung 19 ausgebildet ist, nämlich im Außenumfang der Verteilerhohlwelle 15 (Fig. 5). Der Drehwinkel beträgt bei dem in der Zeichnung dargestellten Ausführungsbeispiel 15°, kann aber auch in Bereichen zwischen 5° bis 30° liegen.

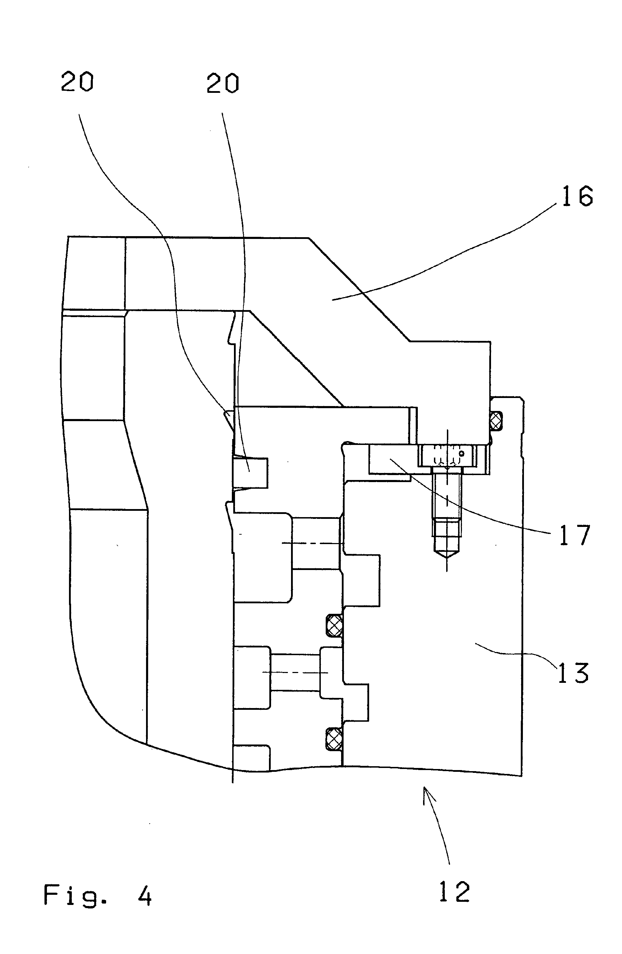

Die Verstellung der Verteilerbuchse 14 weist dabei als ersten Schritt die Drehung auf, nach der die Verteilerbuchse 14 durch eine Öffnung die Dicke der Distanzscheibe 17 (Fig. 4) überwinden und in dem zweiten Schritt die axiale Verschiebung ausführen kann, die weiterhin zur axialen Überdeckung von Mediumführungsrinnen 20 in der Verteilerbuchse 14 und der Verteilerhohlwelle 15 und auch dem Abschlußflansch 21 dient.

Zu beachten ist, daß die Justierung des Verteilerspieles und der nachfolgende Betrieb ohne die Verwendung von Lager auskommt, also ein lagerloser Verteiler 12 bzw. Spannzylinder 1 realisiert ist, bei dem durch die Lager verursachte Restschwingungen vermieden sind.

Der Verzicht auf Lager bedingt höchste Genauigkeit bei der Fertigung und bei der Montage, wozu weiterhin nach der Befestigung des Verteilers 12 und dem Ersatz des Transportflansches 16 durch den Abschlußflansch 21 weitere Rund- und Planlaufprüfungen durchgeführt werden, und zwar an dritten Prüfflächen 22, die am freien Ende der Verteilerhohlwelle 15 radial und axial verlaufend ausgebildet sind und an vierten Prüfflächen 23, die am Verteilergehäuse 13 radial und axial verlaufend ausgebildet sind.

Eine weitere radiale Feineinstellung des Spiels durch das Verteilergehäuse 13 nach den Prüfungen ist durch Stellschrauben 24 möglich, die in der Aufnahmeglocke 9 gleichmäßig über den Umfang verteilt tangential ausgerichtet angeordnet sind.

## Patentansprüche

1. Hydraulisch betätigter Spannzylinder für Spanneinrichtungen an Werkzeugmaschinen (2), mit einem mit der rotierend antreibbaren Arbeitsspindel (6) der Werkzeugmaschine (2) koppelbaren Zylindergehäuse (3) und einem in der Zylinderkammer (4) axial verstellbaren Zylinderkolben (5), sowie mit einem Verteiler (12), der ein feststehendes, die Druckmittelanschlüsse (26) aufweisendes Verteilergehäuse (13) und eine mit dem Zylindergehäuse (3) verbundene, die Druckmittelleitungen (25) aufweisende Verteilerhohlwelle (15) umfaßt, **dadurch gekennzeichnet, daß** das Verteilergehäuse (13) über eine Aufnahmeglocke (9) an der Werkzeugmaschine (2) befestigt ist, daß der Verteiler (12) eine zwischen dem Verteilergehäuse (13) und der Verteilerhohlwelle (15) angeordnete Verteilerbuchse (14) aufweist, und daß die Verteilerbuchse (14) zwischen einer ersten Position, die der Montage des Verteilers (12) und dessen Zentrierung dient, und einer zweiten Position verstellbar ist, in der das Verteilerspiel für die Mediumübertragung bereitgestellt ist.

2. Spannzylinder nach Anspruch 1, **dadurch gekennzeichnet, daß** die erste Position durch einen an dem Verteilergehäuse (13) und der Verteilerhohlwelle (15) befestigten, dem Tranport und der Montage dienenden Transportflansch (16) vorgegeben ist.

3. Spannzylinder nach Anspruch 1 oder 2, **dadurch gekennzeichnet, daß** in der ersten Position die Verteilerbuchse (14) mit ihrem Innendurchmesser auf dem Außendurchmesser der Verteilerhohlwelle (15) zentriert ist, und daß das Verteilergehäuse (13) mit seinem Innendurchmesser auf dem Außendurchmesser der Verteilerbuchse (14) zentriert ist.

4. Spannzylinder nach einem der Ansprüche 1 bis 3, **dadurch gekennzeichnet, daß** in der zweiten Position durch einen den Transportflansch (16) im Austausch ersetzenden Abschlußflansch (21) gehalten die Verteilerbuchse (14) justiert ist.

5. Spannzylinder nach einem der Ansprüche 1 bis 4, **dadurch gekennzeichnet, daß** die Verstellung der Verteilerbuchse (14) zwischen der ersten Position und der zweiten Position eine Drehung um die Zylinderachse (18) und eine Verschiebung in Richtung der Zylinderachse (18) beinhaltet, und daß zur Einstellung des Verteilerspiels zwischen der Verteilerhohlwelle (15) und der Verteilerbuchse (14) in Umfangsrichtung über einen Teilbereich der in der zweiten Position aneinander grenzenden Flächen eine Kehlung (19) ausgebildet ist.

6. Spannzylinder nach Anspruch 5, **dadurch gekennzeichnet, daß** eine den Transportflansch (16) im Austausch ersetzende Montagelehre (27) vorgesehen ist, mit einer an der Verteilerbuchse (14) anschließbaren Stellhülse (28) sowie einer an dem Verteilergehäuse (13) und/oder der Verteilerhohlwelle (15) anschließbaren Referenzhülse (29), und daß die Stellhülse (28) gegenüber der Referenzhülse (29) verstellbar ist.

7. Spannzylinder nach Anspruch 6, **dadurch gekennzeichnet, daß** die Stellhülse (28) zur ihrer translatorischen Verstellung mit einer in der Referenzhülse (29) gelagerten Verstellspindel (30) gekoppelt ist.

8. Spannzylinder nach Anspruch 6, **dadurch gekennzeichnet, daß** Stellhülse (28) gegenüber der Referenzhülse (29) genau um das für die Überführung der Verteilerbuchse (14) aus der ersten Position in die zweite Position erforderliche Maß sowohl translatorisch als auch rotatorisch verstellbar ist.

9. Spannzylinder nach Anspruch 8, **dadurch gekennzeichnet, daß** zwischen der Stellhülse (28) und der Referenzhülse (29) eine Gewindeverbindung (31) ausgebildet ist.

10. Spannzylinder nach Anspruch 9, **dadurch gekennzeichnet, daß** die Gewindeverbindung (31) Anschläge für die Begrenzung des Drehwinkels auf das erforderliche Maß aufweist.

11. Spannzylinder nach Anspruch 9 oder 10, **dadurch gekennzeichnet, daß** das Gewinde der Gewindeverbindung (31) eine Steigung aufweist, die bei der erforderlichen Drehung der Verteilerbuchse (14) deren erforderlichen Vorschub parallel zur Zylinderachse (18) ergibt.

12. Spannzylinder nach einem der Ansprüche 5 bis 11, **dadurch gekennzeichnet, daß** die Kehlung (19) im Außenumfang der Verteilerhohlwelle (15) ausgebildet ist.

13. Spannzylinder nach einem der Ansprüche 5 bis 12, **dadurch gekennzeichnet, daß** der Drehwinkel 5° bis 30°, vorzugsweise 15° beträgt.

14. Spannzylinder nach einem der Ansprüche 1 bis 13, **dadurch gekennzeichnet, daß** die Verstellung der Verteilerbuchse (14) zwischen der ersten Position und der zweiten Position der axialen Überdeckung von Mediumführungsrinnen (20) in der Verteilerbuchse (14) und der Verteilerhohlwelle (15) dient.

15. Spannzylinder nach einem der Ansprüche 2 bis 14, **dadurch gekennzeichnet, daß** dem Transportflansch (16) eine in der ersten Position der Verteilerbuchse (14) zwischen dieser und dem Verteilergehäuse (13) plazierte Distanzscheibe (17) zugeordnet ist.

16. Spannzylinder nach einem der Ansprüche 1 bis 15, **dadurch gekennzeichnet, daß** in der Aufnahmeglocke (9) gleichmäßig über den Umfang verteilt tangential ausgerichtete Stellschrauben (24) angeordnet sind.

17. Spannzylinder nach einem der Ansprüche 1 bis 16, **dadurch gekennzeichnet, daß** am Zylindergehäuse (3) an der Verteilerhohlwelle-Aufnahmepartie (8) radial und axial verlaufende erste Prüfflächen (7) ausgebildet sind.

18. Spannzylinder nach einem der Ansprüche 1 bis 17, **dadurch gekennzeichnet, daß** an der Aufnahmeglocke (9) an der Zylindergehäuse-Aufnahmepartie (11) radial und axial verlaufende zweite Prüfflächen (10) ausgebildet sind.

19. Spannzylinder nach einem der Ansprüche 1 bis 18, **dadurch gekennzeichnet, daß** am freien Ende der Verteilerhohlwelle (15) radial und axial verlaufende dritte Prüfflächen (22) ausgebildet sind.

20. Spannzylinder nach einem der Ansprüche 1 bis 19, **dadurch gekennzeichnet, daß** am Verteilergehäuse (13) radial und axial verlaufende vierte Prüfflächen (23) ausgebildet sind.

21. Verfahren zur Montage eines Spannzylinders nach einem der Ansprüche 1 bis 20, **dadurch gekennzeichnet, daß** das Zylindergehäuse (3) auf das hintere Ende der Arbeitsspindel (6) befestigt wird, daß an den ersten Prüfflächen (7) des Zylindergehäuses (3) eine Rundund Planlaufprüfung erfolgt, daß die Aufnahmeglocke (9) an der Werkzeugmaschine (2) befestigt wird, daß an den zweiten Prüfflächen (10) der Aufnahmeglocke eine Rund- und Planlaufprüfung erfolgt, daß durch den Transportflansch (16) das Verteilergehäuse (13), die Verteilerbuchse (14) und die Verteilerhohlwelle (15) in die Montagelage gebracht werden, in der sich die Verteilerbuchse (14) in ihrer ersten Position befindet, daß in der durch den Transportflansch (16) vorgegebenen Lage die Verteilerhohlwelle (15) an dem Zylindergehäuse (3) und das Verteilergehäuse (13) an der Aufnahmeglocke (9) befestigt wird, daß der Transportflansch (16) entfernt wird, daß die Verteilerbuchse (14) in ihre zweite Position verstellt und dort durch den Abschlußflansch (21) gehalten wird, daß an den dritten Prüfflächen (22) der Verteilerhohlwelle (15) eine Rund- und Planlaufprüfung erfolgt, und daß an den vierten Prüfflächen (23) des Verteilergehäuses (13) eine Rund- und Planlaufprüfung erfolgt.

22. Verfahren nach Anspruch 21, **dadurch gekennzeichnet, daß** zur Verstellung der Verteilerbuchse (14) aus der ersten Position in die zweite Position nach der Entfernung des Transportflansches (16) die
Stellhülse (28) mit der Verteilerbuchse (14) und die Referenzhülse (29) mit dem Verteilergehäuse (13) drehfest verbunden und die Stellhülse (28) verstellt wird.

23. Verfahren nach Anspruch 21, **dadurch gekennzeichnet, daß** zur Verstellung der Verteilerbuchse (14) aus der ersten Position in die zweite Position nach der Entfernung des Transportflansches (16) die
Stellhülse (28) mit der Verteilerbuchse (14) und die Referenzhülse (29) mit der Verteilerhohlwelle (15) drehfest verbunden und die Stellhülse (28) verstellt wird.

24. Verfahren nach Anspruch 21, **dadurch gekennzeichnet, daß** eine radiale Feineinstellung des Verteilergehäuses (13) mit den Stellschrauben (24) erfolgt.
